# EUROPÄISCHE PATENTSCHRIFT

(11) **EP 1 924 474 B1**
(45) Veröffentlichungstag und Bekanntmachung des Hinweises auf die Patenterteilung: **21.07.2010**
(21) Anmeldenummer: 06792698.0
(22) Anmeldetag: 04.08.2006
(51) Int. Cl.: B60W 10/08, B60W 20/00, B60W 30/18

(54) **VERFAHREN ZUR STEUERUNG EINER FAHRZEUG-ANTRIEBSEINHEIT**
METHOD FOR CONTROLLING A VEHICLE DRIVE UNIT
PROCEDE POUR COMMANDER UNE UNITE D'ENTRAINEMENT D'UN VEHICULE

(30) Priorität: 29.08.2005 DE 102005040783
(43) Veröffentlichungstag der Anmeldung: 28.05.2008
(73) Patentinhaber: ROBERT BOSCH GMBH, 70442 Stuttgart (DE)
(72) Erfinder: JUENEMANN, Thorsten, 71069 Sindelfingen (DE); DOERR, Bernd, 74731 Wallduern (DE); NIEMANN, Holger, 71634 Ludwigsburg (DE); HAGMAN, Per, 70469 Stuttgart (DE)
(86) Internationale Anmeldenummer: PCT/EP2006/065065
(87) Internationale Veröffentlichungsnummer: WO 2007/025839

(56) Entgegenhaltungen:
- EP-A- 1 522 447
- DE-A1- 10 155 128
- US-A- 6 064 934
- US-A1- 2004 235 613
- US-A1- 2005 060 079

## Beschreibung

Die Erfindung bezieht sich auf ein Verfahren zur Steuerung einer Fahrzeug-Antriebseinheit, die mindestens zwei einzelne Motoren umfasst, insbesondere auf einen Hybridantrieb, der zumindest einen Verbrennungsmotor und zumindest einen Elektromotor umfasst.

### Stand der Technik

Im Stand der Technik (z. B. aus DE 103 20 017 A1) sind Steuereinrichtungen für eine Antriebseinheit bekannt, die die Antriebseinheit insbesondere hinsichtlich eines abgegebenen Antriebsmoments steuern oder regeln, wobei die Antriebseinheit eine Brennkraftmaschine eines Kraftfahrzeugs ist. Das Kraftfahrzeug umfasst dabei üblicherweise eine durch den Fahrer des Kraftfahrzeugs betätigbare Fahrerwunsch-Aufnahmeeinrichtung, insbesondere ein fußbetätigbares Fahrpedal, die dafür vorgesehen ist, ein einen momentanen Betätigungszustand der Fahrerwunsch-Aufnahmeeinrichtung repräsentierendes Ausgangssignal abzugeben. Eine Steuereinheit empfängt das Ausgangssignal von der Fahrerwunsch-Aufnahmeeinrichtung und ordnet dem empfangenen Ausgangssignal wenigstens eine Soll-Ausgangsgröße, insbesondere einen Soll-Antriebsmoment der Antriebseinheit zu. Die Antriebseinheit wird von der Steuereinheit derart angesteuert, dass sich eine von der Antriebseinheit abgegebene Ist-Ausgangsgröße der Soll-Ausgangsgröße annähert. Derartige Steuereinrichtungen sind in verschiedenen Auslegungen für übliche Kraflfahrzeugmotoren, insbesondere Ottomotoren und Dieselmotoren bekannt, z. B. Bosch-Motorsteuerungssysteme mit elektronischem Gaspedal (EGAS).

Ferner ist es im Stand der Technik bekannt, eine kontinuierliche Momentenüberwachung zur Aufdeckung von Fehlfunktionen im Steuergerät durchzuführen. Dies dient insbesondere dem Schutz von Fahrinsassen in dem Kraftfahrzeug und externen Verkehrsteilnehmern. Es soll eine ungewollte Beschleunigung des Fahrzeugs verhindert werden. Der Kern der kontinuierlichen Momentenüberwachung ist der Vergleich eines vom Motor bereitgestellten Ist-Momentes mit einem zulässigen Moment. Im Normalfall ist das Ist-Moment kleiner als das zulässige Moment. Falls das Ist-Moment das zulässige Moment übersteigt, liegt ein Fehler im Motorsteuergerät vor und eine zu einem sicheren Fahrzeugzustand führende Fehlerreaktion wird eingeleitet.

Die Überwachung der Motorsteuergeräte erfolgt üblicherweise nach einem 3-Ebenen-Überwachungskonzept. Die Motorsteuerung selbst, insbesondere die Vorgabe des Sollmomentes, erfolgt dabei in der als Funktionsebene bezeichneten ersten Ebene. Die zweite Ebene (Überwachungsebene) ist als die kontinuierliche Momentenüberwachung ausgeführt. In dieser Ebene wird unter anderem in Abhängigkeit von Fahrzeug- und Motorfunktionen ein zulässiges Moment ermittelt und mit einem Motor-Ist-Moment verglichen. Die Ebene 2 wird aufwändig abgesichert (Doppelablage aller Variablen, zyklische RAM- und ROM-Prüfung, Programmablaufkontrolle, Befehlstest). Ebene 3 dient zur Rechnerabsicherung.

DE 102 10 684 A1 bezieht sich auf ein Verfahren zur Überwachung eines Moments einer Antriebseinheit eines Fahrzeugs. Das zu überwachende Moment wird mit einem zulässigen Moment verglichen, das zulässige Moment wird dem zu überwachenden Moment nachgeregelt und es wird ein Fehler detektiert, wenn das zu überwachende Moment stärker als ein erster vorgegebener Wert vom zulässigen Moment abweicht, wobei der Fehler nur in dem Fall detektiert wird, in dem eine Stellung eines Bedienelementes, insbesondere eine Fahrpedalstellung, mindestens seit einer ersten vorgegebenen Zeit innerhalb eines vorgegebenen Toleranzbereiches liegt.

DE 197 39 565 A1 betrifft ein Verfahren zur Steuerung des Drehmoments einer Antriebseinheit eines Kraftfahrzeugs, bei welchem das Drehmoment der Antriebseinheit wenigstens nach Maßgabe des Fahrerwunsches eingestellt wird, wobei das Ist-Drehmoment der Antriebseinheit bestimmt wird und wenigstens auf der Basis des Fahrerwunsches ein maximal zulässiges Drehmoment ermittelt wird. Es erfolgt eine Drehmomentenreduzierung und/oder -begrenzung bei Überschreiten des maximal zulässigen Moments durch das Ist-Drehmoment. Dabei wird wenigstens ein Betriebszustand festgestellt, in dem das Drehmoment der Antriebseinheit durch zusätzliche Belastung erhöht ist. Während dieses wenigstens einen Betriebszustands wird das maximal zulässige Moment erhöht. Insbesondere wird dadurch beim Betrieb mit kalter Antriebseinheit und/oder beim Betrieb belastender Verbraucher das zulässige Moment erhöht.

DE 197 48 355 A1 hat ein Verfahren zur Steuerung der Antriebseinheit eines Fahrzeugs zum Gegenstand, wobei das Drehmoment der Antriebseinheit abhängig von einem aus der Stellung eines vom Fahrer betätigbaren Bedienelements abgeleiteten Fahrerwunschmoment und abhängig von wenigstens einem Sollmoment, welches von wenigstens einer externen Funktion vorgegeben wird, die an Stelle oder zusätzlich zur Fahrervorgabe das Drehmoment beeinflusst. Ein maximal zulässiges Drehmoment wird vorgegeben, und bei Überschreiten dieses maximal zulässigen Werts wird durch den entsprechenden Ist-Wert eine Reduzierung des Drehmoments vorgenommen. Das maximal zulässige Moment wird wenigstens abhängig von der Stellung des Bedienelements gebildet und das maximal zulässige Moment wird abhängig von dem Sollmoment der wenigstens einen externen Funktion gebildet, wenn dieses Sollmoment größer als das von der Bedienelementstellung abhängige zulässige Moment ist. Die externe Funktion kann z. B. das Drehmoment gegenüber dem Fahrerwunsch erhöhen, wie eine Motorschleppmomentregelung oder eine Fahrgeschwindigkeitsregelung.

Die beschriebenen, aus dem Stand der Technik bekannten Verfahren der Momentenüberwachung sind nicht ohne Weiteres auf Hybridfahrzeuge übertragbar. In Hybridfahrzeugen kommt neben einem Verbrennungsmotor mindestens eine weitere Momentenquelle (Motor) zum Einsatz. In den meisten Fällen handelt es sich hierbei um einen Elektroantrieb.

In der Motorsteuerung muss nun das vom Fahrer geforderte Wunschmoment, welches beispielsweise durch Bedienen eines Fahrpedals eingestellt wird, auf die vorhandene Momentenquelle (mindestens zwei Motoren) aufgeteilt werden. Dies geschieht in Abhängigkeit zahlreicher Umgebungsvariablen u. a. mit dem Ziel, den verbrauchsgünstigsten Betriebspunkt für alle Momentenquellen einzustellen. Ein derartiges Verfahren ist beispielsweise in DE 102 02 531 A1 beschrieben.

Das Dokument DE10155128 offenbart ein Verfahren zur Steuerung einer Fahrzeug-Antriebseinheit, wobei die Fahrzeug-Antriebseinheit mindestens zwei einzelne Motoren umfasst, wobei ein kontinuierliches Vergleichen eines Gesamt-Ist-Moments mit einem zulässigen Gesamtmoment, wobei das Gesamt-Ist-Moment aus Einzel-Ist-Momentwerten der mindestens zwei einzelnen Motoren und wobei eine Fehlerreaktion eingeleitet wird, wenn das Vergleichen ergibt, dass das Gesamt-Ist-Moment grösser als das zulässige Gesamtmoment ist.

Bisher wird jedoch im Stand der Technik kein Konzept zur Momentenüberwachung bereitgestellt, das auf die besonderen Anforderungen eines solchen Hybridantriebs mit einem oder mehreren Elektromotoren zusätzlich zu einem Verbrennungsmotor im Antriebsstrang eines Fahrzeuges eingeht. Ein mit dem Antriebsstrang verbundener zusätzlicher Elektromotor kann bei zu hohen Ansteuerströmen genauso eine unerwünschte Fahrzeugbeschleunigung verursachen wie ein "durchgehender" Verbrennungsmotor und erfordert daher ebenso eine kontinuierliche Momentenüberwachung.

### Vorteile der Erfindung

Das erfindungsgemäß vorgeschlagene Verfahren zur Steuerung einer Fahrzeugantriebseinheit vermeidet die Nachteile der aus dem Stand der Technik bekannten Verfahren. Insbesondere ermöglicht es das erfindungsgemäße Verfahren, Fehler in der Momentenführung von Hybridfahrzeugen zu erkennen und abzufangen und so die Sicherheit des Gesamtsystems zu erhöhen.

Der Grundgedanke der Erfindung besteht in der Durchführung eines Momentenvergleichs aus einem Gesamt-Ist-Moment und einem zulässigen Gesamtmoment, die die Einzelmomente der mindestens zwei Motoren der Fahrzeugantriebseinheit enthalten.

Dadurch wird in vorteilhafter Weise ein einfaches Konzept bereitgestellt, das mindestens einen zusätzlichen Momentensteller, insbesondere einen Elektromotor, in das bestehende Konzept des Momentenvergleichs integriert. Dabei wird das zusätzliche Moment explizit auf beiden Seiten des Momentenvergleichs berücksichtigt. Dadurch ist eine sehr einfache und allgemein gültige Behandlung der zusätzlichen Momente, z. B. eines Elektromotors für alle Fahrzeugkonfigurationen möglich.

Bei dem erfindungsgemäßen Verfahren weist die Fahrzeug-Antriebseinheit mindestens zwei einzelne Motoren oder Momentenquellen auf. Dabei kann es sich beispielsweise um einen Verbrennungsmotor, insbesondere einen Otto- oder Dieselmotor, und einen Elektromotor oder um zwei Elektromotoren handeln. Es können aber auch mehr Motoren vorhanden sein, z.B. mehr als zwei Elektromotoren.

Das erfindungsgemäß berechnete Gesamt-Ist-Moment wird aus den Einzel-Ist-Momentwerten der mindestens zwei einzelnen Motoren berechnet, insbesondere durch Addition der Einzel-Ist-Momentwerte. Die Bestimmung von Einzel-Ist-Momentwerten jedes einzelnen Motors erfolgt gemäß einer bevorzugten Ausführungsform der vorliegenden Erfindung durch Rückrechnung von Motorgrößen. Bei einem Ottomotor sind mögliche in diese Rückrechnung einbezogene Motorgrößen z. B. gemessene Werte der Luftmenge, Messwerte einer Lambdasonde und/oder gemessene Zündwinkel. Bei einem Dieselmotor können für die Rückrechnung z. B. Einspritzparameter wie Kraftstoffdruck, Ventilöffnungszeit und/oder Ventilschließzeit berücksichtigt werden. Die Rückrechnung für einen Elektromotor erfolgt z. B. durch Umrechnung von Strom, Spannung und/oder Drehzahl des Elektromotors. Die Einzel-Ist-Momentwerte der mindestens zwei einzelnen Motoren können bei dem erfindungsgemäßen Verfahren jedoch auch nach jedem anderen, dem Fachmann geläufigen Verfahren bestimmt werden, z. B. mittels mindestens eines Momentensensors auf einer Kurbelwelle.

Das erfindungsgemäß berechnete zulässige Gesamtmoment wird aus den zulässigen Einzelmomentwerten der mindestens zwei einzelnen Motoren berechnet, insbesondere durch Addition der zulässigen Einzelmomentwerte. Die Bestimmung der zulässigen Einzelmomentwerte jedes einzelnen Motors erfolgt gemäß einer bevorzugten Ausführungsform der vorliegenden Erfindung unter Berücksichtigung von Fahrzeug- und/oder Motorfunktionen, die in die Momentensteuerung oder -regelung der Fahrzeug-Antriebseinheit eingreifen. Beispielsweise bei der Bestimmung eines zulässigen Einzelmomentwertes zu berücksichtigende Fahrzeugfunktionen sind eine Fahrerwunschfunktion, eine Fahrerassistenzfunktion oder externe Eingriffsfunktionen. Die Fahrerwunschfunktion kann z. B. in Form eines Fahrpedalsignals in die Bestimmung des zulässigen Einzelmomentwertes eingehen. Gegebenenfalls zu berücksichtigende Fahrerassistenzfunktionen sind beispielsweise ein elektronisches Stabilitätsprogramm (ESP - in der Regel ABS + ASR), ein Antiblockiersystem (ABS), eine Antriebs-Schlupf-Regelung (ASR), eine Fahrgeschwindigkeitsregelung (FGR) oder ein Abstandsregeltempomat (ACC - Adaptive Cruise Control). Gegebenenfalls zu berücksichtigende externe Eingriffsfunktionen können z. B. Störeinflüsse von elektrischen Verbrauchern wie einer Klimaanlage, eines elektrischen Schiebedachs oder eines Servomotors sein. Motorfunktionen, die in die Momentensteuerung oder -regelung der Fahrzeug-Antriebseinheit eingreifen, und die bei der Bestimmung des zulässigen Einzelmoments des jeweiligen Motors berücksichtigt werden können, sind z. B. eine Drehzahlbegrenzung oder Verlustmomente, insbesondere aufgrund von Reibung oder von Generatorverlusten.

Diese Funktionen werden bei der Berechnung des zulässigen Moments in Ebene 2 des Überwachungskonzeptes mit redundanten Interpretationen berücksichtigt. Die Ebene 2 besteht aus Funktionen, die die Funktionen der Ebene 1 abbilden. So gibt es z.B. in der Ebene 1 eine Interpretation des Fahrpedals in dem Sinne, dass abhängig vom Fahrpedalwinkel und der Motordrehzahl ein Fahrerwunschmoment gebildet wird. In der Ebene 2 gibt es die dazu redundante Interpretation des Fahrpedals, in der auch ein Fahrpedalmoment aus Fahrpedalwinkel der Ebene 2 und Drehzahl der Ebene 2 gebildet wird. Genau diese Redundanz ist die Basis für die Absicherung durch das 3-Ebenen-Sicherheitskonzept. Alle momentenrelevanten Funktionen der Ebene 1 benötigen diese redundanten Funktionen in der Ebene 2.

Bei dem erfindungsgemäßen Verfahren wird eine Fehlerreaktion eingeleitet, falls das Vergleichen des Gesamt-Ist-Momentes mit dem zulässigen Gesamtmoment ergibt, dass das Gesamt-Ist-Moment größer als das zulässige Gesamtmoment ist. Die Fehlerreaktion kann z. B. darin bestehen, dass eine drehzahlbegrenzte Betriebsart mindestens eines oder aller von der Fahrzeug-Antriebseinheit umfassten Motoren eingeleitet wird und/oder ein vorgegebenes Sollmoment für mindestens einen der Motoren reduziert wird. Ferner kann auch mindestens einer der mindestens zwei Motoren ganz abgeschaltet werden, z. B. dadurch, dass eine Kraftstoffzufuhr eines Verbrennungsmotors abgeschaltet wird.

Das erfindungsgemäße Verfahren läuft in der Ebene 2 (Überwachungsebene) eines 3-Ebenen-Überwachungskonzeptes, wie es im Stand der Technik bekannt ist, ab.

Die Erfindung bezieht sich weiterhin auf ein Motorsteuergerät zur Durchführung des erfindungsgemäßen Verfahrens zur Steuerung einer Fahrzeug-Antriebseinheit mit mindestens zwei einzelnen Motoren. Ein erfindungsgemäßes Motorsteuergerät umfasst Mittel zur Addition von Einzel-Ist-Momentwerten mindestens zweier Motoren zu einem Gesamt-Ist-Moment, Mittel zur Addition von zulässigen Einzelmomentwerten der mindestens zwei Motoren zu einem zulässigen Gesamtmoment, Mittel zum Vergleichen des Gesamt-Ist-Moments mit dem zulässigen Gesamtmoment und Mittel zum Einleiten einer Fehlerreaktion, wenn das Gesamt-Ist-Moment größer als das zulässige Gesamtmoment ist.

### Zeichnung

Anhand der Zeichnung wird die Erfindung nachstehend näher erläutert.

Es zeigt:
- Figur 1: ein Ablaufdiagramm für ein Verfahren zur Steuerung eines Fahrzeugmotors nach dem Stand der Technik und
- Figur 2: ein Ablaufdiagramm für eine Ausführungsform eines erfindungsgemäßen Ver- fährens zur Steuerung einer Fahrzeug-Antriebseinheit mit zwei Motoren.

### Ausführungsbeispiele

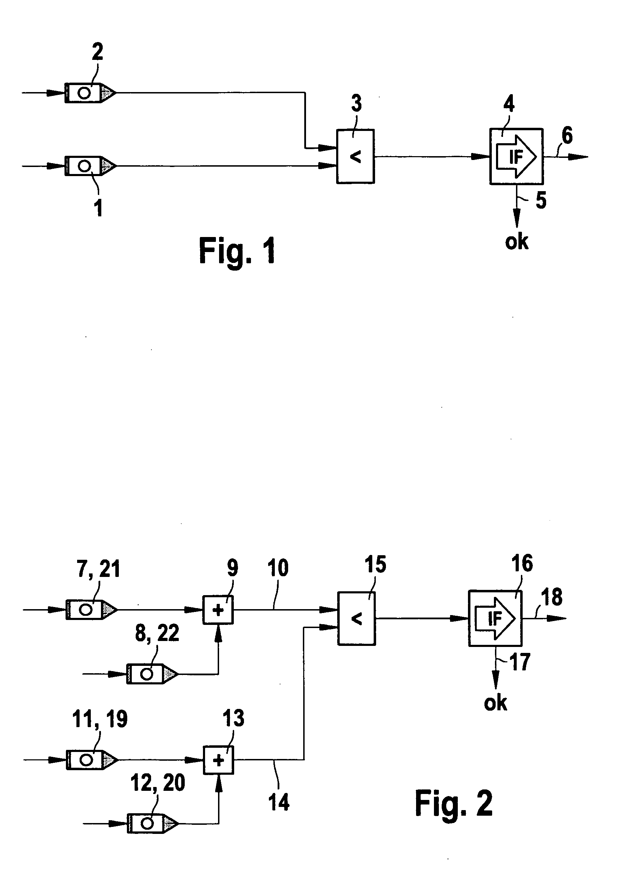

In Figur 1 ist ein dem Stand der Technik entsprechendes Verfahren dargestellt, bei dem eine kontinuierliche Momentenüberwachung eines Fahrzeugmotors, insbesondere eines Verbrennungsmotors, erfolgt.

Im Stand der Technik ist ein Ist-Moment 1 und ein zulässiges Moment 2 des Motors einem Vergleicher 3 zugeführt. Der Vergleicher 3 ermittelt, ob das zulässige Moment 2 kleiner als das Ist-Moment 1 des Motors ist. Programmpunkt 4 prüft dies. Falls das zulässige Moment 2 nicht kleiner als das Ist-Moment 1 ist, wird ein korrekter Betrieb 5 des Motor-Steuergeräts angenommen. Falls das zulässige Moment 2 kleiner als das Ist-Moment 1 ist, wird ein fehlerhafter Betrieb 6 und damit eine fehlerhafte Momentenvorgabe durch das Steuergerät erkannt und daher eine Fehlerreaktion eingeleitet.

In Figur 2 ist ein der Erfindung entsprechendes Verfahren dargestellt, bei dem eine kontinuierliche Momentenüberwachung einer Fahrzeug-Antriebseinheit mit zwei einzelnen Motoren erfolgt.

Beide Motoren weisen jeweils einen zulässigen Einzelmomentwert 7, 8 auf. Aus diesen beiden zulässigen Einzelmomentwerten 7, 8 wird gemäß dem erfindungsgemäßen Verfahren durch eine Addition 9 ein zulässiges Gesamtmoment 10 berechnet. Ferner weisen die zwei Motoren jeweils einen Einzel-Ist-Momentwert 11, 12 auf. Erfindungsgemäß wird durch eine Addition 13 der beiden Einzel-Ist-Momentwerte 11, 12 ein Gesamt-Ist-Moment 14 berechnet. Ein Vergleicher 15 vergleicht, ob das zulässige Gesamtmoment 10 kleiner als das Gesamt-Ist-Moment 14 ist. Programmpunkt 16 prüft dies. Falls das zulässige Gesamtmoment 10 nicht kleiner als das Gesamt-Ist-Moment 14 ist, wird ein korrekter Betrieb 17 des Motor-Steuergeräts oder der Motor-Steuergeräte erkannt. Falls das zulässige Gesamtmoment 10 kleiner als das Gesamt-Ist-Moment ist, wird ein fehlerhafter Betrieb 18 und damit eine fehlerhafte Momentenvorgabe des oder der Steuergeräte erkannt und daher eine Fehlerreaktion eingeleitet.

Gemäß einer bevorzugten Ausführungsform der vorliegenden Erfindung weist die Fahrzeugantriebseinheit eines Fahrzeuges einen Verbrennungsmotor und einen Elektromotor auf, so dass gemäß Figur 2 das Gesamt-Ist-Moment 14 als Summe aus einem Verbrennungsmotor-Ist-Momentwert 19 und einem Elektromotor-Ist-Momentwert 20 und das zulässige Gesamtmoment 10 als Summe aus einem zulässigen Verbrennungsmotormomentwert 21 und einem zulässigen Elektromotormomentwert 22 berechnet wird.

Eine Ausgestaltung dieser bevorzugten Ausführungsform der vorliegenden Erfindung ist, dass der Elektromotor ein Einzel-Ist-Moment erzeugt, das für einen Automatikstart oder einen Start-Stopp-Start des Verbrennungsmotors verwendet wird, wobei der Elektromotor-Ist-Momentwert 20 entweder aus Zustandsgrößen des Fahrzeuges oder über einen Signalbus von einem Steuergerät des Elektromotors erhalten wird. In Fahrzeugen mit Automatikstart oder Start-Stopp-Start wird ein Start aus dem Motorsteuergerät heraus ausgelöst, ohne dass ein Fahrereinbezug durch den Schlüsselstart gegeben ist. Die positiven Elektromomente des Starters stellen einen momentenerhöhenden externen Eingriff dar. In das zulässige Gesamtmoment 10 wird dann das zulässige Startermoment (zulässiger Elektromotormomentwert 22) eingetragen, das redundant zur Ebene 1 in der Ebene 2 des Motorüberwachungskonzeptes gebildet wird und eindeutig vom Fahrzeugzustand abhängt. Das Ist-Moment des Elektromotors 20 stellt hier das Moment des Starters dar und kann entweder in einer Funktion der Ebene 2 aus dem Fahrzeugzustand modelliert werden (analog zum Vorgehen beim Ist-Moment 19 des Verbrennungsmotors) oder über einen Signalbus vom eigensicheren Steuergerät des Elektromotors bezogen werden. Im zweiten Fall ist eine redundante Erfassung des Startermoments analog zu den redundanten Signalerfassungen der externen Eingriffe notwendig. Die Ebene 2 - Gesamtheit der Überwachungsfunktionen - erfasst alle für den Momentenvergleich relevanten Eingangssignale selbst. Da die gleichen Signale auch in der Ebene 1 - Gesamtheit der im Nichtfehlerfall wirksamen Funktionen - erfasst werden, spricht man von einer redundanten Erfassung der Signale in Ebene 2. Eine redundante Erfassung der Signale in Ebene 2 ist notwendig, da nicht gesichert ist, dass die Signalerfassung in der Ebene 1 korrekt funktioniert. Beispiele für redundant vom Bussystem erfasste Signale sind der MSR-Eingriff (Momentenerhöhender Eingriff des Bremsensteuergeräts zum Motorsteuergerät), der momentenerhöhende Getriebeeingriff oder Momentenanforderungen, von einem nicht in die Motorsteuerung intergrierten Fahrgeschwindigkeitsregler (FGR, GRA, ACC).

Gemäß einer anderen Ausgestaltung dieser bevorzugten Ausführungsform der vorliegenden Erfindung mit einem Verbrennungsmotor und einem Elektromotor erzeugt der Elektromotor ein Einzel-Ist-Moment zum Boosten, wobei der Elektromotor-Ist-Momentwert 20 entweder aus Zustandsgrößen des Fahrzeuges oder über einen Signalbus von einem Steuergerät des Elektromotors erhalten wird. Positiv wirkende Momente des Elektromotors im Fahrbetrieb werden hier als Boosten bezeichnet. Das zulässige Boostmoment (zulässiger Elektromotormomentwert 22) wird in Ebene 2 des Motorüberwachungskonzeptes modelliert und in das zulässige Gesamtmoment 10 abgelegt. Wie schon im Fall der Starterüberwachung für einen Automatikstart oder einen Start-Stopp-Start gibt es für das Ist-Moment des Elektromotors 20 die beiden Möglichkeiten der Simulation in Ebene 2 oder der Signalerfassung vom Steuergerät des Elektromotors.

Eine weitere Ausgestaltung der in Figur 2 dargestellten bevorzugten Ausführungsformen der vorliegenden Erfindung mit einem Elektromotor und einem Verbrennungsmotor ist, dass der Elektromotor ein Starter ist, der ein Startermoment für den Verbrennungsmotor erzeugt. Im einfachsten Fall wird dabei der Einzel-Ist-Momentwert des Starters bei der Berechnung des Gesamt-Ist-Moments 14 auf Null gesetzt. So ist eine Weiternutzung der allgemeinen Schnittstelle nach dem Stand der Technik möglich. Es kann aber auch ein Starter-Ist-Moment (Elektromotor-Ist-Momentwert 20) modelliert und gegen ein zulässiges Startermoment (zulässiger Elektromotormomentwert 22) abgeglichen werden.

Weiterhin können bei dem erfindungsgemäßen Verfahren bei der Berechnung des Gesamt-Ist-Momentes 14 und des zulässigen Gesamtmoments 10 negative Einzel-Ist-Momentwerte 11, 12 und negative zulässige Einzelmomentwerte 7, 8 auf Null gesetzt werden oder vorzeichenbehaftet berücksichtigt werden.

Im ersten Fall werden nur positive Momente des Elektromotors in dem zulässigen Elektromotormoment und dem Elektromotor-Ist-Moment behandelt. Es ergibt sich der Vorteil, dass die Momentenstruktur der Ebene 2 des Motorüberwachungskonzeptes fast nicht gegenüber dem Stand der Technik geändert wird, und dass insbesondere die Behandlung der Verlust-Momente im generatorischen Betrieb des Elektromotors unverändert bleibt. Damit einher geht dann aber eine potenzielle Aufweitung des Momentenvergleichs bei zwar negativen, aber zu großen Elektromotormomenten ("weniger Generatormoment als erwartet"), was im Fehlerfall zu einer Verschlechterung der Fahrzeugreaktion führt.

Im zweiten Fall wird der Nachteil der potenziellen Aufweitung des Momentenvergleichs vermieden, wenn die Größen zulässiges Elektromotormoment und Elektromotor-Ist-Moment vorzeichenbehaftet in den Momentenvergleich eingehen. In dem zulässigen Elektromotormoment werden dann innerhalb des zulässigen Moments der Ebene 2 des Motorüberwachungskonzeptes sowohl die negativen Generatorverlustmomente als auch die positiven Boostmomente modelliert. In dem Elektromotor-Ist-Moment wird das vorzeichenbehaftete Ist-Moment des Generators/Motors übernommen. Dieses Ist-Moment kann entweder in einer redundanten Berechnung der Ebene 2 modelliert werden oder von einem externen Steuergerät des Generators/Motors über einen Bus bezogen werden. Gegenüber dem heutigen Standard der Momentenüberwachung ergibt sich ferner der Vorteil, dass das Generatormoment aus den schwer abzuschätzenden Verlustmomenten herausgenommen ist und sich die Überwachungsgüte an diesem kritischen Punkt verbessert.

## Patentansprüche

1. Verfahren zur Steuerung einer Fahrzeug-Antriebseinheit, wobei die Fahrzeug-Antriebseinheit mindestens zwei einzelne Motoren umfasst, **gekennzeichnet durch** ein kontinuierliches Vergleichen (15) eines Gesamt-Ist-Moments (14) mit einem zulässigen Gesamtmoment (10), wobei das Gesamt-Ist-Moment (14) aus Einzel-Ist-Momentwerten (11, 12) der mindestens zwei einzelnen Motoren und das zulässige Gesamtmoment (10) aus zulässigen Einzelmomentwerten (7, 8) der mindestens zwei einzelnen Motoren berechnet wird und wobei eine Fehlerreaktion eingeleitet wird, wenn das Vergleichen (15) ergibt, dass das Gesamt-Ist-Moment (14) größer als das zulässige Gesamtmoment (10) ist.

2. Verfahren gemäß Anspruch 1, wobei die Fahrzeug-Antriebseinheit eines Fahrzeugs einen Verbrennungsmotor und einen Elektromotor aufweist, **dadurch gekennzeichnet, dass** das Gesamt-Ist-Moment (14) als Summe aus einem Verbrennungsmotor-Ist-Momentwert (19) und einem Elektromotor-Ist-Momentwert (20) und das zulässige Gesamtmoment (10) als Summe aus einem zulässigen Verbrennungsmotormomentwert (21) und einem zulässigen Elektromotormomentwert (22) berechnet wird.

3. Verfahren gemäß Anspruch 2, **dadurch gekennzeichnet, dass** der Elektromotor ein Einzel-Ist-Moment erzeugt, das für einen Automatikstart oder einen Start-Stopp-Start des Verbrennungsmotors verwendet wird, wobei der Elektromotor-Ist-Momentwert (20) entweder aus Zustandsgrößen des Fahrzeuges oder über einen Signalbus von einem Steuergerät des Elektromotors erhalten wird.

4. Verfahren gemäß Anspruch 2, **dadurch gekennzeichnet, dass** der Elektromotor ein Einzel-Ist-Moment zum Boosten des Verbrennungsmotors erzeugt, wobei der Elektromotor-Ist-Momentwert (20) entweder aus Zustandsgrößen des Fahrzeuges oder über einen Signalbus von einem Steuergerät des Elektromotors erhalten wird.

5. Verfahren gemäß Anspruch 2, **dadurch gekennzeichnet, dass** der Elektromotor ein Starter ist, der ein Startermoment für den Verbrennungsmotor erzeugt.

6. Verfahren gemäß Anspruch 5, **dadurch gekennzeichnet, dass** der Einzel-Ist-Momentwert des Starters bei der Berechnung es Gesamt-Ist-Moments (14) auf Null gesetzt wird.

7. Verfahren gemäß Anspruch 1, **dadurch gekennzeichnet, dass** mindestens ein Einzel-Ist-Momentwert (11, 12) jeweils durch mindestens eines der folgenden Verfahren ermittelt wird: durch Rückrechnung aus gemessenen Luftmengen-Werten, aus Messwerten einer Lambdasonde, aus einem gemessenen Zündwinkel, aus Einspritzparametern ausgewählt aus Kraftstoffdruck, Ventilöffnungszeit und Ventilschließzeit, durch Umrechnung von Strom, Spannung und Drehzahl eines Elektromotors oder durch mindestens einen Momentensensor auf einer Kurbelwelle.

8. Verfahren gemäß Anspruch 1, **dadurch gekennzeichnet, dass** mindestens ein zulässiger Einzelmomentwert (7, 8) unter Berücksichtigung mindestens einer Größe, ausgewählt aus einem Fahrpedalsignal, einem durch ein Fahrerassistenzsystem erzeugten Moment, einem durch einen externen Eingriff erzeugten Moment und einem Verlustmoment berechnet wird.

9. Verfahren gemäß Anspruch 1, **dadurch gekennzeichnet, dass** bei der Berechnung des Gesamt-Ist-Moments (14) und des zulässigen Gesamtmoments (10) negative Einzel-Ist-Momentwerte (11, 12) und negative zulässige Einzelmomentwerte (7, 8) auf Null gesetzt werden oder vorzeichenbehaftet berücksichtigt werden.

10. Motorsteuergerät zur Durchführung des Verfahrens gemäß einem der Ansprüche 1 bis 9, umfassend Mittel zur Addition von Einzel-Ist-Momentwerten mindestens zweier Motoren zu einem Gesamt-Ist-Moment, Mittel zur Addition von zulässigen Einzelmomentwerten der mindestens zwei Motoren zu einem zulässigen Gesamtmoment, Mittel zum Vergleichen des Gesamt-Ist-Moments mit dem zulässigen Gesamtmoment und Mittel zum Einleiten einer Fehlerreaktion, wenn das Gesamt-Ist-Moment größer als das zulässige Gesamtmoment ist.

## Claims

1. Method for controlling a vehicle drive unit, the vehicle drive unit comprising at least two individual engines, **characterized by** a continuous comparison (15) of a total actual torque (14) with a permissible total torque (10), the total actual torque (14) being calculated from individual actual torque values (11, 12) of the at least two individual engines and the permissible total torque (10) being calculated from permissible individual torque values (7, 8) of the at least two individual engines, and a fault reaction being initiated when the result of the comparison (15) is that the total actual torque (14) is higher than the permissible total torque (10).

2. Method according to Claim 1, the vehicle drive unit of a vehicle having an internal combustion engine and an electric motor, **characterized in that** the total actual torque (14) is calculated as the sum of an internal combustion engine actual torque value (19) and an electric motor actual torque value (20), and the permissible total torque (10) is calculated as the sum of a permissible internal combustion engine torque value (21) and of a permissible electric motor torque value (22).

3. Method according to Claim 2, **characterized in that** the electric motor generates an individual actual torque which is used for an automatic start or a start/stop start of the internal combustion engine, the electric motor actual torque value (20) being obtained either from state variables of the vehicle or via a signal bus from a control apparatus of the electric motor.

4. Method according to Claim 2, **characterized in that** the electric motor generates an individual actual torque for boosting the internal combustion engine, the electric motor actual torque value (20) being obtained either from state variables of the vehicle or via a signal bus from a control apparatus of the electric motor.

5. Method according to Claim 2, **characterized in that** the electric motor is a starter which generates a starter torque for the internal combustion engine.

6. Method according to Claim 5, **characterized in that** the individual actual torque value of the starter is set at zero in the calculation of the total actual torque (14).

7. Method according to Claim 1, **characterized in that** at least one individual actual torque value (11, 12) is determined in each case by means of at least one of the following methods: by recalculation from measured air quantity values, from measurement values of a lambda probe, from a measured ignition angle, from injection parameters selected from the fuel pressure, valve-opening time and valve-closing time, by the conversion of current, voltage and rotational speed of an electric motor or by means of at least one torque sensor on a crankshaft.

8. Method according to Claim 1, **characterized in that** at least one permissible individual torque value (7, 8) is calculated, taking into account at least one variable selected from an accelerator pedal signal, for a torque generated by a driver assistance system, from a torque generated by means of external action and from a lost torque.

9. Method according to Claim 1, **characterized in that**, in the calculation of the total actual torque (14) and of the permissible total torque (10), negative individual actual torque values (11, 12) and negative permissible individual torque values (7, 8) are set at zero or are taken into account in terms of their sign.

10. Engine control apparatus for carrying out the method according to one of Claims 1 to 9, comprising means for the addition of individual actual torque values of at least two engines to form a total actual torque, means for the addition of permissible individual torque values of the at least two engines to form a permissible total torque, means for comparing the total actual torque with the permissible total torque, and means for initiating a fault reaction when the total actual torque is higher than the permissible total torque.

## Revendications

1. Procédé pour commander une unité d'entraînement d'un véhicule, dans lequel l'unité d'entraînement du véhicule comprend au moins deux moteurs individuels, **caractérisé par** une comparaison continue (15) d'un couple instantané total (14) avec un couple total admissible (10), le couple instantané total (14) étant calculé à partir de valeurs de couples instantanés individuels (11, 12) des au moins deux moteurs individuels, et le couple total admissible (10) étant calculé à partir de valeurs de couples individuels admissibles (7, 8) des au moins deux moteurs individuels, et dans lequel une réaction d'erreur est déclenchée si la comparaison (15) indique que le couple instantané total (14) est supérieur au couple total admissible (10).

2. Procédé selon la revendication 1, dans lequel l'unité d'entraînement de véhicule d'un véhicule présente un moteur à combustion interne et un moteur électrique, **caractérisé en ce que** le couple instantané total (14) est calculé comme la somme d'une valeur de couple instantané du moteur à combustion interne (19) et d'une valeur de couple instantané du moteur électrique (20) et le couple total admissible (10) est calculé comme la somme d'une valeur de couple de moteur à combustion interne admissible (21) et d'une valeur de couple du moteur électrique admissible (22).

3. Procédé selon la revendication 2, **caractérisé en ce que** le moteur électrique produit un couple instantané individuel qui est utilisé pour un démarrage automatique ou un mode marche-arrêt-marche du moteur à combustion interne, la valeur du couple instantané du moteur électrique (20) étant obtenue soit à partir de valeurs d'état du véhicule soit par le biais d'un bus de signaux à partir d'un appareil de commande du moteur électrique.

4. Procédé selon la revendication 2, **caractérisé en ce que** le moteur électrique produit un couple instantané individuel pour amplifier la performance du moteur à combustion interne, la valeur du couple instantané du moteur électrique (20) étant obtenue soit à partir de valeurs d'état du véhicule soit par le biais d'un bus de signaux à partir d'un appareil de commande du moteur électrique.

5. Procédé selon la revendication 2, **caractérisé en ce que** le moteur électrique est un démarreur, qui produit un couple de démarrage pour le moteur à combustion interne.

6. Procédé selon la revendication 5, **caractérisé en ce que** la valeur de couple instantané individuel du démarreur est mise à zéro lors du calcul du couple instantané total (14).

7. Procédé selon la revendication 1, **caractérisé en ce qu'**au moins une valeur de couple instantané individuel (11, 12) est déterminée à chaque fois par au moins l'un des procédés suivants : par calcul de retour de valeurs de quantité d'air mesurées, par des valeurs de mesure d'une sonde lambda, par un angle d'allumage mesuré, par des paramètres d'injection choisis parmi la pression du carburant, le temps d'ouverture des soupapes, et le temps de fermeture des soupapes, par calcul du courant, de la tension et du régime d'un moteur électrique ou par au moins un capteur de couple sur un vilebrequin.

8. Procédé selon la revendication 1, **caractérisé en ce qu'**au moins une valeur de couple individuel admissible (7, 8) est calculée en tenant compte d'au moins une grandeur, choisie parmi un signal de pédale d'accélérateur, un couple produit par un système d'assistance à la conduite, un couple produit par une intervention extérieure et un couple de perte.

9. Procédé selon la revendication 1, **caractérisé en ce que** lors du calcul du couple instantané total (14) et du couple total admissible (10), des valeurs de couples instantanés individuels négatives (11, 12) et des valeurs de couples individuels admissibles négatives (7, 8) sont mises à zéro ou sont prises en compte en leur affectant un signe.

10. Appareil de commande de moteur pour mettre en oeuvre le procédé selon l'une quelconque des revendications 1 à 9, comprenant des moyens pour additionner des valeurs de couples instantanés individuels d'au moins deux moteurs pour donner un couple instantané total, des moyens pour additionner des valeurs de couples individuels admissibles des au moins deux moteurs pour donner un couple total admissible, des moyens pour comparer le couple instantané total au couple total admissible et des moyens pour déclencher une réaction d'erreur quand le couple instantané total est supérieur au couple total admissible.
